# EUROPÄISCHE PATENTSCHRIFT

(11) **EP 0 939 988 B1**
(45) Veröffentlichungstag und Bekanntmachung des Hinweises auf die Patenterteilung: **02.11.2000**
(21) Anmeldenummer: 97951139.1
(22) Anmeldetag: 06.11.1997
(51) Int. Cl.: H02B 1/30

(54) **ECKVERBINDUNG FÜR EIN RAHMENGESTELL**
CORNER CONNECTOR FOR A RACK
ELEMENT D'ASSEMBLAGE D'ANGLE POUR BAIE

(30) Priorität: 19.11.1996 DE 19647791
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: BENNER, Rolf, D-35745 Herborn (DE); KÖHLER, Martina, D-35745 Herborn (DE); MÜNCH, Udo, D-35764 Sinn (DE); REUTER, Wolfgang, D-57299 Burbach 5 (DE)
(74) Vertreter: Fleck, Hermann-Josef, Dr.-Ing.
(86) Internationale Anmeldenummer: EP9706153
(87) Internationale Veröffentlichungsnummer: WO9823013

(56) Entgegenhaltungen:
- EP-A- 0 649 205
- DE-A- 2 504 721
- FR-A- 2 674 581
- US-A- 3 919 603

## Beschreibung

Die Erfindung betrifft ein Rahmengestell für einen Schaltschrank mit horizontalen Tiefen- und Längsstreben, an die in den Eckbereichen über Eckverbindungen vertikale Rahmenschenkel angeschlossen sind, und wobei die Eckverbindung ein Angleichstück aufweist.

Ein solches Rahmengestell ist aus der FR 2 674 581 bekannt.

Das in dieser Druckschrift gezeigte Rahmengestell weist einen Boden- und einen Deckrahmen auf. In den Eckbereichen des Boden- und des Deckrahmens können vertikale Rahmenprofile angeschlossen werden. Hierzu werden Eckverbinder verwendet. Die Eckverbinder weisen drei, jeweils zueinander vertikal stehende Steckansätze auf. Auf diese Steckansätze können die als Hohlprofile ausgebildeten horizontalen Tiefen- und Längsstreben sowie die vertikalen Rahmenschenkel aufgeschoben werden. Zur Fixierung eines vertikalen Rahmenschenkels werden zwei Klammerelemente verwendet. Die Klammerelemente sind mit Rastansätzen versehen. Sie können an dem Steckansatz angeschraubt werden, wobei die Rastansätze über die Außengeometrie des Steckansatzes vorstehen. Das vertikale Rahmenprofil ist mit zwei Ausnehmungen versehen, die in ihrer Geometrie auf die Rastansätze angepaßt ausgebildet sind. Beim Aufschieben des vertikalen Rahmenprofiles auf den Steckansatz werden die Klammerelemente zunächst ausgelenkt und hinterschnappen dann die Ausnehmungen, wodurch das vertikale Rahmenprofil mit seiner Stirnseite auf eine Stoßfläche des Eckverbinders aufgepreßt wird.

An Schaltschränke werden unterschiedliche Anforderungen gestellt. Hierzu müssen insbesondere die vertikalen Rahmenschenkel angepaßt ausgebildet sein. So werden beispielsweise verschiedene Querschnitte für Rahmenschenkel eingesetzt, die für unterschiedliche Anbaumöglichkeiten geeignet sind.

Für diese unterschiedlichen Anwendungsmöglichkeiten werden angepaßte Schaltschränke konzipiert, wodurch ein hoher Aufwand erforderlich ist.

In der DE 41 35 108 ist beispielsweise ein Eckverbinder bekannt, bei dem an einen Grundkörper drei rechtwinklig zueinander stehende Ansätze angebracht sind. Auf die Ansätze können die einzelnen Rahmenschenkel und Längs- bzw. Tiefenstreben aufgeschoben werden.

Ein anderer Eckverbinder ist in der DE 44 39 624 beschrieben. Auch hier ist ein Grundkörper verwendet, an dem für jeden Rahmenschenkel und jede Längs- und Tiefenstrebe jeweils zwei Ansätze abstehen. Die Ansätze sind in Hohlkammern, beispielsweise des Rahmenschenkels eingesteckt.

Es ist Aufgabe der Erfindung, einen Schaltschrank der eingangs erwähnten Art zu schaffen, der auf einfache Weise eine Variabilität für verschiedene Anwendungsmöglichkeiten bietet.

Diese Aufgabe wird dadurch gelöst, daß mittels dem Angleichstück wahlweise verschieden ausgestaltete, vertikale Rahmenschenkel anschließbar sind, und daß mittels der Angleichstücke der lichte Abstand zwischen benachbarten vertikalen Rahmenschenkeln festlegbar ist.

Mit dieser Ausgestaltung wird es ermöglicht, daß zwischen den vertikalen Rahmenschenkeln Einbauten mit unterschiedlicher Einbaubreite festgelegt werden können. Dies ermöglicht, daß Rahmengestelle bereitgestellt werden können, die sich ohne großen Aufwand auf unterschiedliche Maßsysteme anpasssen lassen. Beispielsweise kann ein Rahmengestell, daß im metrischen Maßsystem aufgebaut ist, einfach so verändert werden, daß 19"-Einheiten zwischen den vertikalen Rahmenschenkeln eingeführt werden können. Mit dieser einfachen Maßnahme läßt sich damit eine große Variabilität bei Schaltschränken ermöglichen.

Nach einer Ausgestaltung der Erfindung ist es vorgesehen, daß die Tiefen- und Längsstreben als Hohlprofile ausgebildet sind, die in den Eckbereichen des Rahmengestelles Aufnahmen für vertikal abstehende Ansätze aufweisen, und daß in die Aufnahmen die Angleichstücke einsetzbar sind.

Bei solchen Ausgestaltungen eines Rahmengestelles sind in die Aufnahmen sowohl die Ansätze als auch die Angleichstücke einsetzbar. Abhängig von der Querschnittsgeometrie des vertikalen Rahmenschenkels können die Angleichstücke variieren. Auch der Ansatz selber kann variabel gestaltet sein.

Eine einfache Ausgestaltung der Erfindung ist dadurch gekennzeichnet, daß die Längs- und die Tiefenstreben eine gleiche Querschnittsform aufweisen und aus einem Blechzuschnitt gebogen sind, daß die Längs- und Tiefenstreben einen horizontalen Deckenabschnitt aufweisen, an den eine parallel zur Außenseite des Rahmengestelles verlaufende Abwinklung angeschlossen ist, an die eine rechtwinklige Abkantung nach innen gerichtet, angebunden ist, daß von der rechtwinkligen Abkantung eine, sich parallel zur Abwinklung erstreckende Wand anschließt, die zusammen mit der rechtwinkligen Abkantung eine gegenüber der Abwinklung rückspringende Aufnahme bildet, und daß die Wand in ein Bodenteil übergeht. Dadurch, daß die Längs- und Tiefenstreben eine gleiche Querschnittsform aufweisen und aus einem Blechzuschnitt gebogen sind, läßt sich ein einfacher Grundrahmen aufbauen.

Ist hierbei vorgesehen, daß der Deckenabschnitt gegenüber dem Bodenteil in Längsrichtung der Tiefen- und/oder Längsstreben zurückversetzt sind, so bildet sich eine Aufnahme für den Ansatz. Der Ansatz kann hierbei mit Anschlagflächen an den Wänden der Längs- bzw. Tiefenstreben anliegen. Damit läßt der Ansatz einfach ausrichten und kann schnell und sicher mit den Längs- und Tiefenstreben verbunden, beispielsweise verschweißt werden.

Eine einfache Ausgestaltung eines Rahmenschenkels, bei der die lichte Weite zwischen den beiden vertikalen vorderen Rahmenschenkeln veränderbar ist, ist dadurch gekennzeichnet, daß der vertikale Ansatz in die im Eckbereich gebildete Aufnahme eingesetzt ist, daß der Ansatz mit einem Befestigungsabschnitt an der Wand der Tiefenstrebe anliegt, und daß der Ansatz an einer Anschlagfläche des Angleichstückes anliegt, das zwischen dem Ansatz und dem Deckabschnitt der Längsstrebe eingesetzt ist.

Die Erfindung wird im folgenden anhand eines in den Zeichnungen dargestellten Beispieles näher erläutert. Es zeigen:
- **Fig. 1**: in perspektivischer Seitendarstellung einen Sockel eines Gestellrahmens, an dem ein vertikaler Rahmenschenkel festlegbar ist und
- **Fig. 2**: in perspektivischer Seitendarstellung den Sockel gemäß Fig. 1, an dem ein anderer vertikaler Rahmenschenkel anbringbar ist.

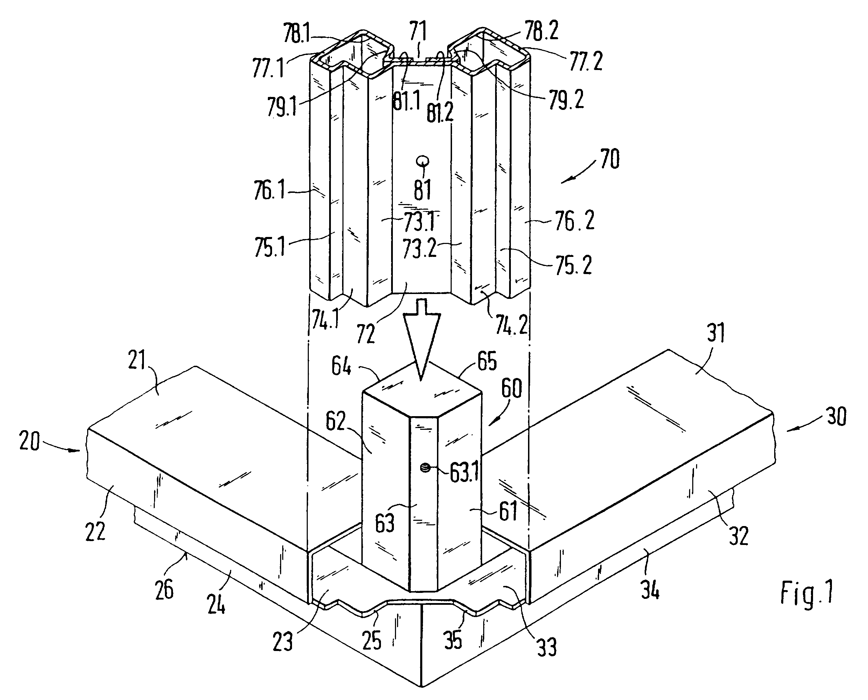

Die Fig. 1 zeigt einen Sockel, der aus Tiefen- und Längsstreben 20 und 30 mit gleicher Querschnittsgeometrie zusammengesetzt ist. Die Tiefen- bzw. Längsstreben sind aus einem Blechzuschnitt gebogen. Hierbei ist ein horizontaler Deckabschnitt 21,31 vorgesehen, von dem eine Abwinklung 22,32 rechtwinklig nach unten abgekantet ist. Die Abwinklungen 22,32 stehen parallel zu den Außenseiten des Rahmengestelles. An ihnen können Seitenwandelemente des Schaltschrankes anliegen.

Zur Abdichtung kann zwischen den Seitenwandelementen und den Abwinklungen 22,32 eine Dichtung vorgesehen sein. Von der Abwinklung 22,32 ist eine rechtwinklige Abkantung 23,33 zurückgebogen. Diese geht in eine vertikale Wand 24,34 über, die bei dem vorliegenden Sockel auf dem Boden aufsteht. In dem von der Wand 24,34 und der Abkantung 23,33 gebildeten Rücksprung kann eine Abkantung der Seitenwandelemente aufgenommen werden. Auf der nicht sichtbaren Unterseite der Längs- bzw. Tiefenstreben 30 bzw. 20 ist ein Bodenteil 26 angeordnet.

Zur Bildung einer Eckverbindung ist der Deckabschnitt 21,31 gegenüber dem Bodenteil 26 an der Stirnseite der Längs- und Tiefenstrebe 30,20 zurückverschoben. Hierdurch bildet sich eine Aufnahme, die Zugang zum Innenraum der Längs- bzw. Tiefenstrebe 30 bzw. 20 schafft. In diese Aufnahme kann ein Ansatz 60 eingestellt werden. Der Ansatz 60 steht rechtwinklig zu der Längs- bzw. Tiefenstrebe 30 bzw. 20. Er weist zwei rechtwinklig zueinander stehende Zentrierflächen 61,62 auf, die an den Wänden 24,34 anliegen. Unterseitig steht der Ansatz 60 auf dem Bodenteil 26 auf. An seinen beiden Freiflächen 64,65 liegt der Ansatz 60 stirnseitig an den Deckelabschnitten 21,31 an. Dadurch, daß der Ansatz 60 mit seinen beiden Freiflächen 61,62 an den Wänden 34,24 anliegt, ist eine vertikale Ausrichtung einfach erreicht. Der Ansatz 60 kann nun einfach an dem Sockel befestigt, beispielsweise festgeschraubt oder mit diesem verschweißt werden.

An dem Ansatz 60 kann nun ein vertikaler Rahmenschenkel 70 festgemacht werden. Der vertikale Rahmenschenkel 70 weist hierzu einen Verbindungssteg 72 auf, an den sich rechts und links Hohlkammern anschließen. Die Hohlkammern sind hierbei aus einem mehrfach abgewinkelten Blechzuschnitt gebildet. Im einzelnen schließt sich an den Verbindungssteg 72 eine Abwinklung 73.1, 73.2 an. Die Abwinklung 73.1, 73.2 geht über einen Übergangsschnitt 74.1, 74.2 in die Abkantung 75.1, 75.2 über. Die Abkantungen 75.1, 75.2 stehen hierbei vertikal zu den Seitenwänden des Rahmengestelles. Von diesen Abkantungen 75.1, 75.2 sind Anlagestege 76.1, 76.2 rechtwinklig abgewinkelt und damit parallel zu den Seitenwänden des Rahmengestelles ausgerichtet. An den Anlagestegen 76.1, 76.2 können die Seitenwandelemente abgedichtet anliegen. Die Anlagestege 76.1, 76.2 gehen in Seitenwände 77.1, 77.2 über. Die Seitenwände 77.1, 77.2 stehen zueinander im rechten Winkel.

Zusammen mit den Führungsflächen 78.1, 78.2 bilden sie vertikale Kanten, die zum Innenraum des Rahmengestelles gerichtet sind.

An den Seitenwänden 77.1, 77.2 und den Führungsflächen 78.1, 78.2 können Reihen von Befestigungsaufnahmen vorgesehen sein, an denen Einbauten festgelegt werden können. Die Führungsflächen 78.1, 78.2 gehen in Nutseitenwände 79.1, 79.2 über, die zueinander im Winkel stehen und so eine hinterschnittene Schwalbenschwanznut bilden.

Die Nutseitenwände 79.1, 79.2 sind in ihrem Nutgrund abgebogen, so daß sich Endstücke 81.1, 81.2 ergeben. Die Endstücke 81.1, 81.2 sind parallel zu dem Verbindungssteg 72 ausgerichtet und liegen an diesem an.

Zur Anbindung des vertikalen Rahmenschenkels 70 an dem Ansatz 60 liegen die Führungsflächen 78.1, 78.2 an den Zentrierflächen 61, 62 den Ansatzes 60 an. Der Rahmenschenkel 70 kann an dem Ansatz 60 festgeschraubt werden. Hierzu ist in dem Verbindungssteg 72 eine Schraubenaufnahme 81 eingebracht. Fluchtend hierzu weist der Ansatz 60 an einem Befestigungsabschnitt 63 eine Gewindeaufnahme 63.1 auf. Zusätzlich oder alternativ kann der vertikale Rahmenschenkel auch noch mit der Tiefen- und Längsstrebe 20 und 30 verschweißt werden. Die Tiefen- und die Längsstrebe 20,30 sind an ihren rechtwinkligen Abkantungen 23, 33 mit Ausklinkungen 25, 35 versehen. Diese Ausklinkungen 25, 35 sind so gestaltet, daß sie an die Außenkontur des Rahmenschenkels 70 angepaßt sind. Damit kann auch hier eine einfache Verschweißung erfolgen. Zusätzlich ist erreicht, daß sich keine spitzkantigen Überstände im Bereich bilden, die eine Verletzungsgefahr darstellen würden.

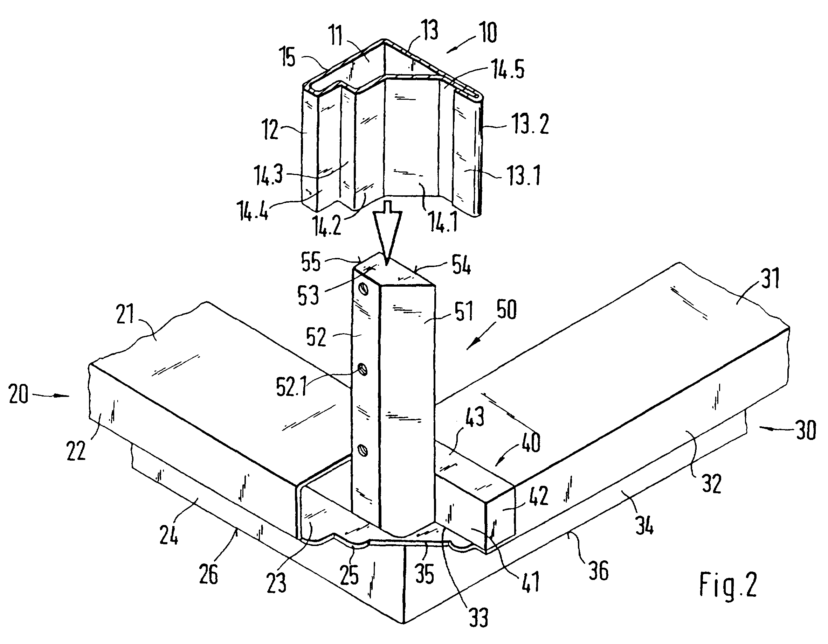

In Fig. 2 ist gezeigt, wie der aus Längs- und Tiefenstreben 20 und 30 zusammengesetzte Sockel mittels eines Angleichstückes 40 derart veränderbar ist, daß ein anderer vertikaler Rahmenschenkel 10 mit einer zum Rahmenschenkel 70 verschiedenen Querschnittsgeometrie angebunden werden kann. Hierzu ist ein anderer Ansatz 50 verwendet. Der Ansatz 50 weist einen Befestigungsabschnitt 52 auf, der an der Wand 24 der Tiefenstrebe 20 anliegt.

In den Befestigungsabschnitt 52 sind Gewindeaufnahme 52.1 eingebracht, an denen der vertikale Rahmenschenkel 10 angeschraubt werden kann. Desweiteren weist der Ansatz 50 drei Zentrierflächen 51,54 und 55 auf. Die Zentrierfläche 55 liegt an dem Deckabschnitt 21 der Tiefenstrebe 20 an. Die zweite Zentrierfläche 54 ist parallel zu dem Befestigungsabschnitt 52 angeordnet und liegt an einer Anschlagfläche 41 des Angleichstückes 40 an. Das Angleichstück 40 ist im Querschnitt rechteckförmig ausgebildet und liegt auf der rechtwinkligen Abkantung 33 der Längsstrebe 30 auf. Vorderseitig schließt das Angleichelement 40 an seiner Frontseite 42 mit der Abwinklung 32 ab. Das Ausgleichelement 40 ist an den Deckelabschnitt 31 angeschoben und kann hier festgemacht, beispielsweise verschweißt werden.

Auf den Ansatz 50 kann nun der vertikale Rahmenschenkel 10 aufgeschoben werden. Der vertikale Rahmenschenkel 10 weist zwei, im rechten Winkel zueinander stehende Seitenwände 13 und 15 auf. Die beiden Seitenwände 13 und 15 bilden eine vertikale Kante, die zum Innenraum des Gestellrahmens gerichtet ist. Die Seitenwand 15 geht in eine Abwinklung 12 über, die parallel zur Seitenfläche des Gestellrahmens ausgerichtet ist. An der Abwinklung 12 können Seitenwandelemente abgedichtet angelegt werden. Die Abwinklung 12 geht über einen Übergangsabschnitt 14.3 in zwei Abkantungen 14.1, 14.2 über. Die Abkantungen 14.1, 14.2 stehen zueinander im Winkel und bilden einen Freiraum, indem beispielsweise Scharnierelemente oder Schließelemente einer Türschließanlage aufgenommen werden können.

Die Abkantung 14.1 schlägt rückseitig an der Seitenwand 13 an und geht in einen Endabschnitt 14.5 über, der parallel zur Seitenwand 13 ausgerichtet ist. Die Seitenwand 13 selbst übergreift den Endabschnitt 14.5 mittels eines Falzes 13.1. Die Seitenwand 13 und der Falz 13.1 bilden eine vertikal verlaufende Dichtkante 13.2.

Im Anbauzustand ist der Ansatz 50 in die von dem vertikalen Rahmenschenkel 10 umschlossene Aufnahme 11 eingesetzt. Der vertikale Rahmenschenkel 10 kann nun an der Tiefenstrebe 20 und an dem Angleichstück 40 festgeschweißt werden. Zusätzlich kann auch vorgesehen sein, daß der vertikale Rahmenschenkel 10 an den Gewindeaufnahmen 52.1 des Befestigungsabschnittes 52 festgeschraubt ist.

Bei dem so veränderten Rahmengestell ist die lichte Weite zwischen den beiden vorderen vertikalen Rahmenschenkeln 10 vergrößert worden. Mit dieser Vergrößerung können nun breitere Einbauten zwischen den vertikalen Rahmenschenkeln 10 eingesetzt werden. Eine bevorzugte Anwendung ist vorliegend darin zu sehen, daß ein Rahmengestell bei dem Einbauten mit Gehäuseabmaßen von 19" zwischen die vertikalen Rahmenschenkel 10 eingesetzt werden können. Soll eine metrische Bauvariante erreicht werden, so wird auf das Angleichstück 40 verzichtet und die Ausgestaltung nach Fig. 1 eingesetzt.

## Patentansprüche

1. Rahmen estell für einen Schaltschrank mit horizontalen Tiefen- und Längsstreben (20, 30), an die in den Eckbereichen über Eckverbindungen vertikale Rahmenschenkel (10, 70) angeschlossen sind, und wobei die Eckverbindung ein Angleichstück (40) aufweist,
dadurch gekennzeichnet,
daß mittels dem Angleichstück (40) wahlweise verschieden ausgestaltete, vertikale Rahmenschenkel (10,70) anschließbar sind, und
daß mittels der Angleichstücke (40) der lichte Abstand zwischen benachbarten vertikalen Rahmenschenkeln (10,70) festlegbar ist.

2. Rahmengestell nach Anspruch 1,
dadurch gekennzeichnet,
daß die Tiefen- und Längsstreben (20,30) als Hohlprofile ausgebildet sind, die in den Eckbereichen des Rahmengestelles Aufnahmen für vertikal abstehende Ansätze (50,60) aufweisen, und
daß in die Aufnahmen die Angleichstücke (40) einsetzbar sind.

3. Rahmengestell nach Anspruch 1 oder 2,
dadurch gekennzeichnet,
daß der Abstand zwischen den vertikalen Rahmenschenkeln (10) auf metrisches oder zölliges Baugruppenträgermaß einstellbar ist.

4. Rahmengestell nach einem der Ansprüche 1 bis 3,
dadurch gekennzeichnet,
daß die Längs- und die Tiefenstreben (20,30) eine gleiche Querschnitts-form aufweisen und aus einem Blechzuschnitt gebogen sind,
daß die Längs- und Tiefenstreben (20,30) einen horizontalen Deckenabschnitt (21,31) aufweisen, an den eine parallel zur Außenseite des Rahmengestelles verlaufende Abwinklung (22,32) angeschlossen ist, an die eine rechtwinklige Abkantung (23,33) nach innen gerichtet, angebunden ist,
daß von der rechtwinkligen Abkantung (23,33) eine, sich parallel zur Ab-winklung (22,32) erstreckende Wand (24,34) anschließt, die zusammen mit der rechtwinkligen Abkantung (23,33) eine gegenüber der Ab-winklung (22,32) rückspringende Aufnahme bildet, und
daß die Wand (24) in ein Bodenteil (26,36) übergeht.

5. Rahmengestell nach Anspruch 4,
dadurch gekennzeichnet,
daß der Deckenabschnitt (21,31) gegenüber dem Bodenteil (26,36) in Längsrichtung der Tiefen- und/oder Längsstreben (20,30) zurückversetzt sind, so daß sich eine Aufnahme für den Ansatz (50,60) bildet.

6. Rahmengestell nach Anspruch 5,
dadurch gekennzeichnet,
daß die Wände (24,34) der Längs- und Tiefenstreben (20,30) Anschlagflächen für den Ansatz (50,60) bilden.

7. Rahmengestell nach Anspruch 5 oder 6,
dadurch gekennzeichnet,
daß der vertikale Ansatz (50) in die im Eckbereich gebildete Aufnahme eingesetzt ist,
daß der Ansatz (50) mit einem Befestigungsabschnitt (52) an der Wand (24) der Tiefenstrebe (20) anliegt, und
daß der Ansatz (50) an einer Anschlagfläche (41) des Angleichstückes (40) anliegt, das zwischen dem Ansatz (50) und dem Deckabschnitt (31) der Längsstrebe (30) eingesetzt ist.

## Claims

1. Framework for a switchgear cabinet, including horizontal depth and longitudinal bars (20,30), which communicate with vertical frame members (10,70) in the corner regions via corner joints, and the corner joint having an adaptor piece (40), characterised in that differently configured vertical frame members (10,70) are selectively connectable by means of the adaptor piece (40), and in that the unobstructed spacing between adjacent vertical frame members (10,70) is adjustable by means of the adaptor pieces (40).

2. Framework according to claim 1, characterised in that the depth and longitudinal bars (20,30) are configured as hollow profiles which have receiving means for vertically protruding extensions (50,60) in the corner regions of the framework, and in that the adaptor pieces (40) are insertable into the receiving means.

3. Framework according to claim 1 or 2, characterised in that the spacing between the vertical frame members (10) can be set to a metric or imperial assembly carrier dimension.

4. Framework according to one of claims 1 to 3, characterised in that the longitudinal and the depth bars (20,30) have an identical cross-sectional configuration and are bent from a sheet metal blank, in that the longitudinal and depth bars (20,30) have a horizontal top portion (21,31), which communicates with a bent-over portion (22,32), which extends parallel to the external side of the framework, and to which is connected a rectangular angular portion (23,33) in an inwardly orientated manner, in that, from the rectangular angular portion (23,33), a wall (24,34) communicates, which extends parallel to the bent-over portion (22,32) and forms a receiving means, which is backwardly orientated relative to the bent-over portion (22,32), together with the rectanglar angular portion (23,33), and in that the wall (24) passes into a bottom part (26,36).

5. Framework according to claim 4, characterised in that the top portion (21,31) is offset from the bottom part (26,36), when viewed with respect to the longitudinal direction of the depth and/or longitudinal bars (20,30), so that a receiving means for the extension (50,60) is formed.

6. Framework according to claim 5, characterised in that the walls (24,34) of the longitudinal and depth bars (20,30) form stop faces for the extension (50,60).

7. Framework according to claim 5 or 6, characterised in that the vertical extension (50) is inserted into the receiving means, formed in the corner region, in that the extension (50) abuts with a securing portion (52) against the wall (24) of the depth bar (20), and in that the extension (50) abuts against a stop face (41) of the adaptor piece (40), which is inserted between the extension (50) and the top portion (31) of the longitudinal bar (30).

## Revendications

1. Ossature d'encadrement pour une armoire de distribution, ossature comprenant des entretoises de profondeur et de largeur horizontales (20, 30), auxquelles dans les zones d'angle et au moyen d'assemblages d'angle sont raccordés des montants d'encadrement verticaux (10, 70), et où l'assemblage d'angle présente une pièce d'adaptation (40),
caractérisée
en ce qu'au moyen de la pièce d'adaptation (40) peuvent être raccordés à volonté des montants d'encadrement verticaux (10, 70) diversement équipés, et
en ce qu'au moyen des pièces d'adaptation (40) peut être choisie la distance entre montants d'encadrement verticaux (10, 70) voisins.

2. Ossature d'encadrement suivant la revendication 1,
caractérisée
en ce que les entretoises de profondeur et de largeur (20, 30) sont des profilés creux qui dans les zones d'angle de l'ossature d'encadrement présentent des logements de réception pour des embouts (50, 60) orientés verticalement, et
en ce que les pièces d'adaptation (40) peuvent être placées dans les logements de réception

3. Ossature d'encadrement suivant la revendication 1 ou la revendication 2,
caractérisée
en ce que la distance entre les montants d'encadrement verticaux (10) peut être réglée de manière à être adaptée à des modules du système métrique ou du système anglo-américain à pouces.

4. Ossature d'encadrement suivant l'une quelconque des revendications de 1 à 3,
caractérisée
en ce que les entretoises de profondeur et de largeur (20, 30) présentent toutes la même forme de section transversale et sont fabriquées par cintrage d'un flan en tôle,
en ce que les entretoises de profondeur et de largeur (20, 30) présentent une aile de recouvrement horizontale (21, 31) à laquelle est raccordée une aile coudée à angle droit (22, 32) parallèle à la face extérieure de l'ossature d'encadrement, à laquelle est raccordée une aile (23, 33) coudée à angle droit vers l'intérieur,
en ce qu'à cette dernière aile coudée à angle droit (23, 33) se raccordé une paroi (24, 34), laquelle conjointement avec l'aile coudée à angle droit (23, 33) forme un logement de réception en retrait par rapport à l'aile coudée (22, 32), et
en ce que la paroi (24) se transforme en un élément de base ou de fond (26, 36).

5. Ossature d'encadrement suivant la revendication 4,
caractérisée
en ce que par rapport à l'élément de base ou de fond (26, 36), l'aile de recouvrement (21, 31) est, en direction longitudinale des entretoises de profondeur et/ou de largeur (20, 30), située en retrait, de telle sorte qu'il est formé un logement de réception pour l'embout (50, 60).

6. Ossature d'encadrement suivant la revendication 5,
caractérisée
en ce que les parois (24, 34) des entretoises de profondeur et de largeur (20, 30) constituent des surfaces de butée pour l'embout (50, 60).

7. Ossature d'encadrement suivant la revendication 5 ou la revendication 6,
caractérisée
en ce que l'embout vertical (50) est placé dans le logement de réception formé dans la zone d'angle,
en ce que l'embout (50) s'applique par un tronçon de fixation (52) sur la paroi (24) de l'entretoise de profondeur (20), et
en ce que l'embout (50) s'applique à une surface de butée (41) de la pièce d'adaptation (40), laquelle est mise en place entre l'embout (50) et l'aile de recouvrement (31) de l'entretoise de largeur (30).
